# EUROPEAN PATENT SPECIFICATION

(11) **EP 1 352 270 B1**
(45) Date of publication and mention of the grant of the patent: **31.08.2005**
(21) Application number: 02701040.4
(22) Date of filing: 10.01.2002
(51) Int. Cl.: G02B 5/30

(54) **DEVICE AND METHOD FOR FORMING ANISOTROPIC FILMS**
VORRICHTUNG UND METHODE ZUR HERSTELLUNG ANISOTROPISCHER FILME
DISPOSITIF ET PROCEDE DE FORMATION DE FILMS ANISOTROPES

(30) Priority: 10.01.2001 RU 2001100534; 08.01.2002 US 43959
(43) Date of publication of application: 15.10.2003
(73) Proprietor: Optiva, Inc., South San Francisco, CA 94080 (US)
(72) Inventor: LAZAREV, Pavel, I., Belmont, CA 94002 (US); PAUKSHTO, Michael, V., Foster City CA 94404 (US)
(74) Representative: Setna, Rohan P.
(86) International application number: PCT/US2002/000729
(87) International publication number: WO 2002/056066

(56) References cited:
- EP-A- 0 840 145
- US-A- 3 235 631
- US-A- 5 739 296

## Description

### Related Applications

This application claims priority to Russian Application Serial No. RU 2001100534 filed January 10, 2001.

### Field of the invention

The invention pertains to technology of fabricating thin films, featuring anisotropic properties, such as: optical, magnetic, electric conductivity, etc. In particular, the invention is directed to devices and methods for obtaining polarizing films from liquid-crystalline (LC) solutions of organic materials, for example organic dyes.

### Related Art

Currently, optically anisotropic films obtained from LC solutions of organic dyes are widely utilized especially in fabrication of devices for presenting information. (See RU 2155978, 10/09/2000, G 02 B 5/30.) Such films represent thin layers of molecularly ordered organic materials. Flat molecules of the mentioned materials are grouped into orientationally ordered assemblies - supramolecular complexes. The planes of molecules and their dipole moments of optical transition are oriented perpendicular to the axis of macroscopic orientation of the film. In order to create such structure one uses liquid-crystalline state of an organic material solution, in particular - a dye, where molecules already possess local orderliness, while existing in one- or two-dimensional quasi-crystalline aggregates oriented relative to each other. Upon application of such system on the surface of a base and the application of an external orienting action, they assume macroscopic orientation, which in the process of drying not only remains intact, but is also enhanced due to crystallization phenomenon. The polarization axis is directed along the orientation direction coinciding with the direction of application of the polarizer. Peculiarities in the structure of these films necessitate designing special means for their fabrication.

There are various known methods of forming the above-mentioned films and, accordingly, there are various devices for their implementation. See for example U.S. 5,739,296, where application of an LC solution is performed using a drawing slot or a Mayer's rod; the latter may be of knife-like (doctor blade) or cylindrical type. Application of an LC solution on the surface of the substrate may be carried out with simultaneous orientation of the supramolecular complexes in a particular direction. The drying process concludes the fabrication process of these films. However, the known devices do not obtain films having reproducible parameters with a high degree of anisotropy. It is believed that this is due to defects in the molecular structure of the film appearing during its fabrication. Besides that, the fabrication process demands long preparation work to develop particular fabrication conditions for each new batch of raw material.

The fabrication of LC films has not been sufficiently studied. Designers face the tasks of enhancing degree of orientation of the resulting films, increasing reproducibility of their parameters, as well as increasing degree of anisotropy of their properties.

### Summary of the invention

The present invention relates to a method and device for fabricating anisotropic films from liquid-crystalline solutions of organic or inorganic materials, in particular optically anisotropic films from LC solutions of organic dyes with high degree of anisotropy and high degree of perfection of their structure (crystallinity), with significant reproducibility of results. The device makes use of a mechanical element for additional orienting action and creating rheological conditions to increase the degree of perfection of the film's structure.

Applicability of the herein method and the device is not restricted to formation of optically anisotropic films from LC solution of an organic dye. Some films formed from inorganic lyotropic liquid crystals, for example iron oxohydroxide or vanadium oxide feature anisotropic electrical and magnetic properties.

The choice of conditions for fabricating an anisotropic film is determined depending on the utilized materials; their viscosity, volatility of the solvent, ability of the kinetic units in solution to orient and form a structure. In each particular case one can choose corresponding speeds of translation of the mechanical elements in the device and the rate at which to supply solution, as well as the size of the obtained films and distances between elements in the device.

Technical result of the herein invention is the design of the device and the method of fabricating an anisotropic film from LC solutions of organic or inorganic materials, which enhance perfection of the structure of the obtained films, enhance reproducibility of parameters over the surface of the film as well as through its thickness, and also enhance anisotropy of properties.

Technical result of the invention is achieved by the fact that in the device for fabricating anisotropic films from a liquid crystal solution of organic and/or inorganic materials on a substrate (7), comprising:
means (2,3,4) for supplying the liquid crystal solution,
means (6,11,12) for providing external orienting action to the solution and/or molecules and/or supramolecular complexes of the solution,
a solution-directing element (5) implemented as a plate for applying the solution onto the substrate, wherein the distance between said means (2,3,4) for supplying the liquid crystal solution, said means (6,11,12) for providing external orienting action, and said solution-directing element (5) as well as the distance between these elements and the substrate are chosen such that a laminar flow of the solution onto the substrate is enabled, and
means for providing relative movement between the substrate and the solution-directing element in a first direction that is in the plane of the substrate (7) and in a second direction that is perpendicular to the plane of the substrate (7).

In the herein device, one may provide means of forming several films at the same time from various materials, using different substrate holders.

The plate may be implemented as flat, installed at an angle from 0° to 90° to the plane of the substrate holder. At least a part of the plate may be implemented as a cylindrical surface.

In the direction perpendicular to the direction of the relative translation of the above listed means and the substrate holder(s), dimensions of at least one plate may be larger than dimensions of the substrate holder(s), and/or the traverse dimension of the plate edge situated on the side of the substrate holder may be no less than the traverse dimension of the forming film.

At least a part of the plate surface may possess hydrophilic and/or hydrophobic properties. At least a part of the plate surface may feature a relief. Plate(s) may be made out of a polymer material or rubber or at least two various materials, comprising different parts of the plate(s) and/or comprising different layers of the plate(s).

At least one means of the orienting influence may be implemented as knife-like or cylindrical rod, rotating or not. At least one means of orienting influence contains at least one additional plate, one end of which is fixed so that during relative translation of the additional plate and the substrate holder(s) at least a part of the surface of the additional plate translates freely over the substrate surface immediately behind the main means of orienting influence.

At least one means of feeding the solution(s) contains at least one injector for supplying solution(s), and/or at least one system of transmitting rollers, and/or at least one channel with a dosimeter of solution(s) supply.

The surface of at least one orienting means may feature a relief.

The device may additionally be equipped with at least one means for removing the solvent from the forming film, which may be implemented as a heating element and/or an air or gas blower unit, and/or a radiating unit, which may be fixed such as to provide processing of at least a part of the substrate surface.

The device may be additionally equipped with a means of providing static conditions, at least one anti-vibration means, and a system of automatic operation and/or fabrication process control.

Technical result of the method of fabrication of an anisotropic film on a substrate from a liquid crystal solution of organic and/or inorganic materials is achieved by the fact that the method comprises the steps of:
supplying the liquid crystal solution on the surface of a solution-directing element (5);
allowing the solution to flow along the surface of the solution-directing element onto the surface of the substrate (7);
translating the substrate (7) relative to the solution-directing element (5) in a first direction; wherein a laminar flow of the solution onto the substrate is enabled; and
applying an external orienting action on the solution on the substrate by an orienting means (6,11,12) as the substrate is translated.

After and/or in the process of orienting action the forming film is dried.

The element directing liquid crystalline solution is situated at such distance from the substrate and the orienting element, which would provide laminar flow of solution onto the substrate.

The distance between the means of supply, directing and the orienting elements, as well as the distance between the above mentioned elements and the substrate holder are chosen such as to form a film with the desired thickness on the substrate and to provide laminar flow of liquid-crystalline solution upon the contact with the substrate and further flow of solution onto the substrate.

From the supplying element LC solution is fed to the directing element, where preliminary orientation already takes place. Besides that, mechanical elements of the device are installed at such distances from each other and move at such speeds that the flow of solution fed to the substrate becomes laminar. This promotes orientation of kinetic units (elements of the dispersion phase) in solution and obtaining ordered structure throughout the entire thickness of the film. Absence of turbulence during supply and application of the orienting action to the solution decreases defects in the structure induced by disorientation.

### Brief description of drawings

The invention will be more clearly understood from the following description when read in conjunction with the drawings in which:
Figure 1 is a schematic diagram of a device for carrying out the present invention.
Figures 2a and 2b schematically illustrate distribution of the kinetic units in solution (elements of the dispersion phase) during formation of the film: a) in the traditional setup with cylindrical rod, b) according to the disclosed invention, also with cylindrical rod.
Figure 3 is a schematic diagram of a device which includes an element for removing the solvent from the forming film, implemented in the form of a heating element.
Figure 4 is a schematic diagram of a device, wherein the function of the element of the aligning influence is performed by a knife-like blade.

### Description of Preferred Embodiments

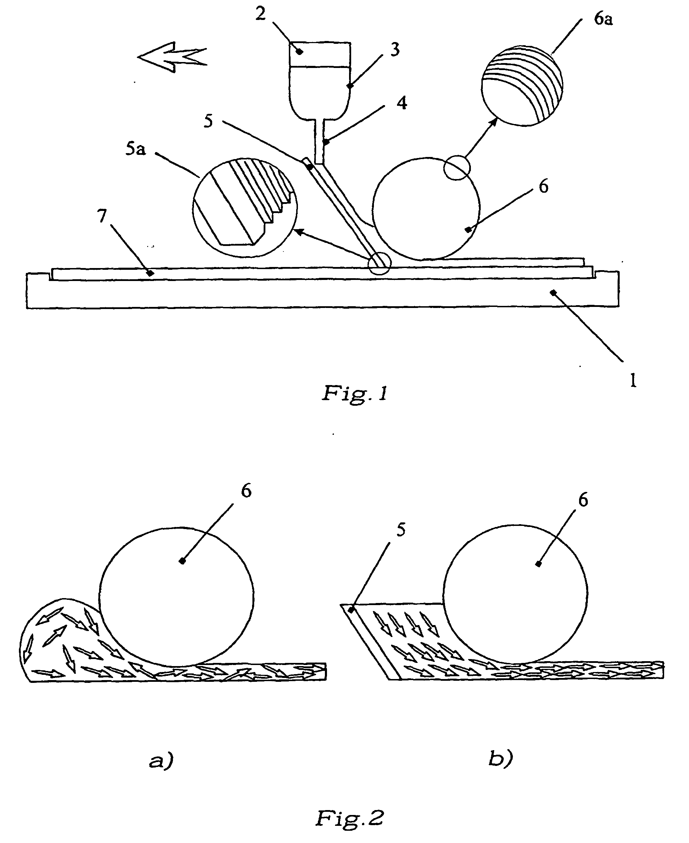

The main parts of the device illustrated in the Figure 1 are: the substrate holder 1; the element for supplying the liquid dispersion system 2 (liquid crystal solution of an organic or inorganic material), implemented as dispenser 3 and channel 4 for delivering the solution; guiding or solution-directing element 5; the element of aligning influence 6, represented by a cylindrical rod. The element 5 may be provided with aligning grooves 5a to initially align the kinetic elements which are further aligned by the aligning element 6 which may also include aligning grooves 6a. A part of the plate or element 5 may include a cylindrical surface (not shown) adjacent the substrate.

During operation of the device, the substrate 7 is placed on the substrate holder 1. The elements 2 and 5 are mounted with the possibility of translating relative to the substrate holder 1 such as to provide delivery of depositing solution over the entire area of the substrate 7 and provide external aligning influence on the kinetic units (elements of the dispersion phase) of the solution, Figure 2b. Besides that, there is a possibility to mount elements 2 and 5 at the necessary distance from each other and the substrate holder. These distances are chosen such as to provide uniform distribution of the depositing solution over the substrate, to onset laminar flow in the stream of the depositing solution (Figure 2b), and to provide uniform aligning influence on the kinetic units in the depositing solution throughout the entire thickness of the depositing layer. The mentioned distances and the rate of relative translation of the elements 2, 5 and the substrate holder are determined depending on the viscosity of the solution and the necessary thickness of the forming anisotropic film in each particular case. The mentioned operating parameters of the device are determined experimentally or calculated using known algorithms.

The means of delivering the solution is situated and/or implemented in such a way that the solution is first delivered onto the inner (relative to the aligning element 6) surface of the guiding element 5, and then, under the influence of gravity, free-flows along the guiding element to align the kinetic units and deliver the solution onto the substrate, filling the gap between the elements 5 and 6 over the entire width of the substrate. The edge of the element 5, which delivers solution onto the substrate, is usually positioned parallel to the longitudinal axis of the rod, and, correspondingly, perpendicular to the direction of translation.

However, there may be cases when the mentioned edge of the element 5 and the longitudinal axis of the element 6 are not parallel. This would be necessary to obtain anisotropic films with their characteristics varying over their area. Different distance between the edge of the element 5 and the element 6 along the longitudinal axis of the element 6 will lead to non-uniform flow of the solution onto the substrate and, correspondingly, different aligning influence on the kinetic units in solution in the different regions of the substrate.

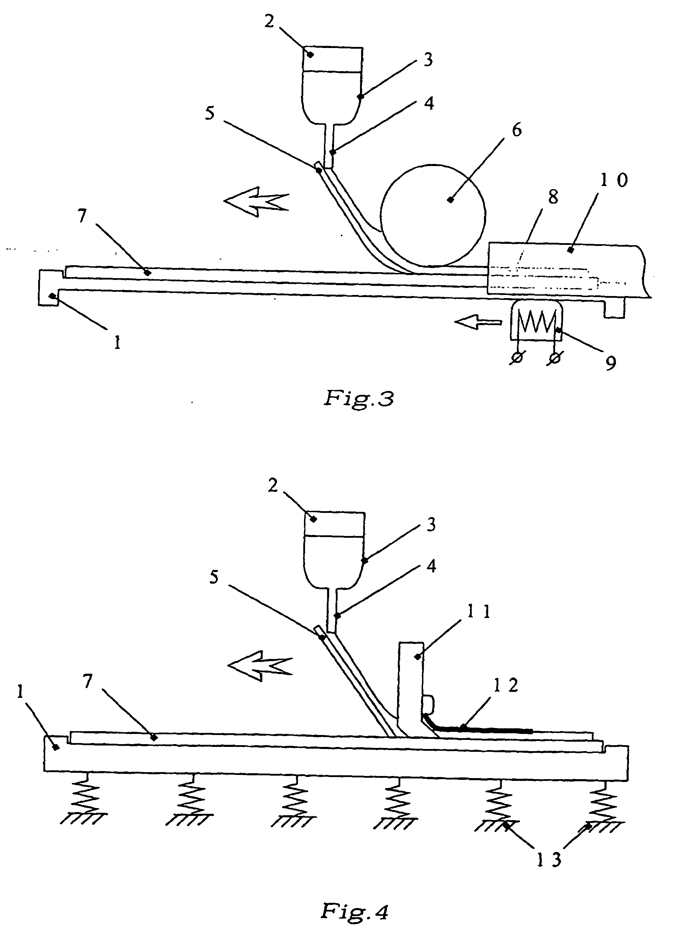

Figure 3 illustrates a device, which besides the substrate holder 1, the element for supplying the dispersion system 2, implemented in the form of dispenser 3 and channel 4 for solution delivery, guiding element 5 and aligning element 6, contains the element for removing the solvent from the forming film 8, implemented in the form of a heating element 9. The device may additionally contain lid 10, which provides static conditions of the drying process (removing the solvent from the forming film). Simultaneous use of elements 9 and 10 allows providing optimum conditions for fabricating anisotropic films and consistently fabricate films with high optical characteristics.

Figure 4 illustrates a device, wherein the function of the element of the aligning influence is performed by a knife-like blade 11. The element of the aligning influence also comprises one flexible plate 12, one end of which is fixed in such a way that during relative translation of the additional plate 12 and the substrate holder 1, a part of the surface of the additional plate is freely moving over the surface of the substrate 7 right after the main element of aligning influence 11. The role of this plate is to perform additional aligning influence on the forming film in the process of removing the solvent, which improves its optical characteristics and increases consistency of parameters over the entire surface of the film. Good results may be obtained when using anti-vibrational elements 13 within the device, which stabilize conditions of deposition and fabrication of the film.

An example of implementation of the method of fabrication of an optically anisotropic film is described. The original material for obtaining optically anisotropic film is aqueous LC solution of sulfonated indanthrone. The dye concentration in the lyotropic LC (LLC) is 7.0 wt. %. Mayer's rod #4 works as the external orienting element, represented by a cylinder wound with a wire, which provides the thickness of the wet layer 9.5 µm. The means of supplying LLC appears as a flat plate, installed at an angle of 60° to the plane of the substrate. The distance between the elements 3 and 4, is 2mm. The speed of movement of the elements 3 and 4 relative to the substrate is 12.5 mm/sec. After application of LLC, orientating and drying one obtains a film 0.3-0.4µm thick, with optical characteristics K_{d} = 25 at T = 40%, i.e. better compared to the traditionally obtained with such systems K_{d} = 20-22 at T = 40%. (K_{d} - dichroic ratio).

Thus, the suggested method and device for its implementation open new possibilities of obtaining films possessing anisotropic properties (optical, magnetic and other) and perfect structure. Via using the declared invention, one obtains a film with a more perfect structure (and as a consequence, with higher anisotropy of properties) than via analogous methods (in analogous conditions) without using the directing element of the declared design. The presented example does not exhaust all possible uses of the declared invention. One can obtain separate films on different substrate holders, as well as one or several films even with different characteristics on a single substrate holder. The declared device and the method may be used as an independent unit or an operation in any technological line of fabricating anisotropic films. Good results are obtained by using the device with anti-vibration and other facilities, which stabilize application conditions. Besides that, it is recommended to use means ot automatic operating and control, especially with computer operation of the process.

## Claims

1. A device for fabricating anisotropic films from a liquid crystal solution of organic and/or inorganic materials on a substrate (7), comprising:
means (2,3,4) for supplying the liquid crystal solution,
means (6, 11, 12) for providing external orienting action to the solution and/or molecules and/or supramolecular complexes of the solution,
a solution-directing element (5) implemented as a plate for applying the solution onto the substrate, wherein the distance between said means (2,3,4) for supplying the liquid crystal solution, said means (6,11,12) for providing external orienting action, and said solution-directing element (5) as well as the distance between these elements and the substrate are chosen such that a laminar flow of the solution onto the substrate is enabled, and
means for providing relative movement between the substrate and the solution-directing element in a first direction that is in the plane of the substrate (7) and in a second direction that is perpendicular to the plane of the substrate (7).

2. A device as claimed in claim 1, wherein the plate is flat and installed at an angle from 0° to 90° to the plane of the substrate.

3. A device as claimed in claim 1, wherein the solution-directing element is implemented as a plate that includes a cylindrical surface.

4. A device as claimed in any one of claims 1 to 3, wherein, in the direction perpendicular to the first and second directions, the dimensions of the plate of the solution-directing element are larger than the dimensions of the substrate.

5. A device as claimed in any one of claims 1 to 3, wherein at least a part of the plate possesses hydrophilic or hydrophobic properties.

6. A device as claimed in any one of claims 1 to 3, wherein at least a part of the plate surface features a relief.

7. A device as claimed in any one of claims 1 to 3, wherein the plate is made out of a polymer material.

8. A device as claimed in any one of claims 1 to 3, wherein the plate is made of rubber.

9. A device as claimed in any one of claims 1 to 3, wherein the plate is made of two different materials.

10. A device as claimed in any one of claims 1 to 3, wherein the means for providing external orienting action comprises a cylindrical rod, a roller, or a doctor blade.

11. A device as claimed in claim 10, wherein the means for providing external orienting action further comprise a second plate, one end of which is fixed such that during motion of the second plate relative to the substrate at least a part of the surface of the second plate is freely translating over the substrate surface immediately behind the main means for providing external orienting action.

12. A device as claimed in claim 10, wherein the orienting means includes a surface relief.

13. A device as claimed in any one of the preceding claims, further comprising means for removing solvent from the supplied liquid crystal solution.

14. A device as claimed in claim 13, wherein the means for removing solvent comprises a heating element, an air or gas blower, or a radiating unit, and installed such as to provide processing of at least a part of the substrate surface.

15. A device as claimed in any one of the preceding claims, wherein the supplying means comprises an injector, a system of transmitting rollers or a channel with a dosimeter of the solution supply.

16. A device as claimed in any one of the preceding claims, further comprising means (10) for providing static conditions during the drying process.

17. A device as claimed in any one of the preceding claims, further comprising an anti-vibration means (13).

18. A method of fabricating an anisotropic film on a substrate from a liquid crystal solution of organic and/or inorganic materials comprising the steps of:
supplying the liquid crystal solution on the surface of a solution-directing element (5);
allowing the solution to flow along the surface of the solution-directing element onto the surface of the substrate (7);
translating the substrate (7) relative to the solution-directing element (5) in a first direction; wherein a laminar flow of the solution onto the substrate is enabled; and
applying an external orienting action on the solution on the substrate by an orienting means (6,11,12) as the substrate is translated.

19. A method as claimed in claim 18, further comprising a step of drying the supplied liquid crystal solution.

20. A method as claimed in claim 18 or claim 19, wherein the solution-directing element is placed at such a distance from the substrate and the orienting means that the solution flows laminarly onto the substrate.

## Patentansprüche

1. Vorrichtung zur Herstellung anisotroper Filme aus einer Flüssigkristalllösung organischer und/oder anorganischer Materialien auf einem Substrat (7), umfassend:
Mittel (2, 3, 4) zum Zuführen der Flüssigkristalllösung,
Mittel (6, 11, 12) zum Bereitstellen einer externen Orientierungswirkung auf die Lösung und/oder Moleküle und/oder supramolekulare Komplexe der Lösung,
ein als Platte ausgestaltetes Lösungsführungselement (5) zum Applizieren der Lösung auf das Substrat, wobei der Abstand zwischen dem Mittel (2, 3, 4) zum Zuführen der Flüssigkristalllösung, dem Mittel (6, 11, 12) zum Bereitstellen der externen Orientierungswirkung und dem Lösungsführungselement (5) sowie der Abstand zwischen diesen Elementen und dem Substrat so gewählt werden, dass eine laminare Strömung der Lösung auf das Substrat ermöglicht wird, und
Mittel, um eine relative Bewegung zwischen dem Substrat und dem Lösungsführungselement in einer ersten Richtung, die in der Ebene des Substrats (7) liegt und in einer zweiten Richtung, die senkrecht zu der Ebene des Substrats (7) liegt, bereitzustellen.

2. Vorrichtung nach Anspruch 1, worin die Platte flach ist und in einem Winkel von 0° bis 90° zu der Ebene des Substrats angeordnet ist.

3. Vorrichtung nach Anspruch 1, worin das Lösungführungselement als eine Platte ausgestaltet ist, die eine zylindrische Oberfläche aufweist.

4. Vorrichtung nach einem der Ansprüche 1 bis 3, worin die Abmessungen der Platte des Lösungsführungselements in der Richtung senkrecht zu der ersten und der zweiten Richtung größer sind als die Abmessungen des Substrats.

5. Vorrichtung nach einem der Ansprüche 1 bis 3, worin zumindest ein Teil der Platte hydrophile oder hydrophobe Eigenschaften aufweist.

6. Vorrichtung nach einem der Ansprüche 1 bis 3, worin zumindest ein Teil der Plattenoberfläche eine Strukturierung aufweist.

7. Vorrichtung nach einem der Ansprüche 1 bis 3, worin die Platte aus einem Polymermaterial hergestellt ist.

8. Vorrichtung nach einem der Ansprüche 1 bis 3, worin die Platte aus Gummi hergestellt ist.

9. Vorrichtung nach einem der Ansprüche 1 bis 3, worin die Platte aus zwei unterschiedlichen Materialien hergestellt ist.

10. Vorrichtung nach einem der Ansprüche 1 bis 3, worin das Mittel für die Bereitstellung einer externen Orientierungswirkung einen zylindrischen Stab, eine Rolle oder ein Streichmesser umfasst.

11. Vorrichtung nach Anspruch 10, worin das Mittel zur Bereitstellung einer externen Orientierungswirkung ferner eine zweite Platte umfasst, von der ein Ende so fixiert ist, dass während einer Bewegung der zweiten Platte relativ zu dem Substrat zumindest ein Teil der Oberfläche der zweiten Platte sich frei über der Substratoberfläche verschiebt, unmittelbar hinter dem Hauptmittel für die Bereitstellung einer externen Orientierungswirkung.

12. Vorrichtung nach Anspruch 10, worin das Orientierungsmittel eine Oberflächenstrukturierung aufweist.

13. Vorrichtung nach einem der vorhergehenden Ansprüche, welche ferner ein Mittel zum Entfemen von Lösungsmittel von der zugeführten Flüssigkristalllösung umfasst.

14. Vorrichtung nach Anspruch 13, worin das Mittel zum Entfernen von Lösungsmittel ein Heizelement, ein Luft- oder Gasgebläse oder eine Bestrahlungseinheit umfasst und so angeordnet ist, um zumindest einen Teil der Substratoberfläche zu bearbeiten.

15. Vorrichtung nach einem der vorhergehenden Ansprüche, worin das Zuführmittel einen Injektor, ein System von Übertragungsrollen oder einen Kanal mit einem Dosimeter der Lösungszufuhr umfasst.

16. Vorrichtung nach einem der vorhergehenden Ansprüche, welche ferner ein Mittel (10) umfasst, um statische Bedingungen während des Trocknungsprozesses bereitzustellen.

17. Vorrichtung nach einem der vorhergehenden Ansprüche, welche ferner ein Anti-Vibrationsmittel (13) umfasst.

18. Verfahren zur Herstellung eines anisotropen Films auf einem Substrat aus einer Flüssigkristalllösung organischer und/oder anorganischer Materialien, welches die folgenden Schritte umfasst:
Zuführen der Flüssigkristalllösung auf die Oberfläche eines Lösungsführungselements (5);
die Lösung entlang der Oberfläche des Lösungsführungselements auf die Oberfläche des Substrats (7) strömen lassen;
Verschieben des Substrats (7) relativ zu dem Lösungsführungselement (5) in einer ersten Richtung; wobei eine laminare Strömung der Lösung auf das Substrat ermöglicht wird; und
Anwenden einer externen Orientierungswirkung auf die Lösung auf dem Substrat durch ein Orientierungsmittel (6, 11, 12), wenn das Substrat verschoben wird.

19. Verfahren nach Anspruch 18, welches weiter einen Trocknungsschritt der zugeführten Flüssigkristalllösung umfasst.

20. Verfahren nach Anspruch 18 oder Anspruch 19, worin das Lösungsführungselement in einem solchen Abstand von dem Substrat und dem Orientierungsmittel angeordnet ist, dass die Lösung laminar auf das Substrat strömt.

## Revendications

1. Dispositif pour fabriquer des films anisotropes à partir d'une solution à cristaux liquides de matières organiques et/ou inorganiques sur un substrat (7), comprenant :
un moyen, (2, 3, 4) pour fournir la solution à cristaux liquides,
un moyen (6, 11, 12) pour réaliser une action d'orientation externe sur la solution et/ou sur les molécules et/ou sur les complexes supramoléculaires de la solution,
un élément (5) pour diriger la solution mis en oeuvre comme une plaque pour appliquer la solution sur le substrat, dans lequel la distance entre ledit moyen (2, 3, 4) pour fournir la solution à cristaux liquides, ledit moyen (6, 11, 12) pour réaliser l'action d'orientation externe, et ledit élément (5) pour diriger la solution aussi bien que la distance entre ces éléments et le substrat sont choisis de sorte que l'on permet un flux laminaire de la solution sur le substrat, et
un moyen pour réaliser un mouvement relatif entre le substrat et l'élément pour diriger la solution dans une première direction qui est dans le plan du substrat (7) et dans une seconde direction qui est perpendiculaire au plan du substrat (7).

2. Dispositif selon la revendication 1, dans lequel la plaque est plate et installée à un angle de 0° à 90° par rapport au plan du substrat.

3. Dispositif selon la revendication 1, dans lequel l'élément pour diriger la solution est mis en oeuvre comme une plaque qui comprend une surface cylindrique.

4. Dispositif selon l'une quelconque des revendications 1 à 3, dans lequel, dans la direction perpendiculaire aux première et seconde directions, les dimensions de la plaque de l'élément pour diriger la solution sont plus grandes que les dimensions du substrat.

5. Dispositif selon l'une quelconque des revendications 1 à 3, dans lequel au moins une partie de la plaque possède des propriétés hydrophiles ou hydrophobes.

6. Dispositif selon l'une quelconque des revendications 1 à 3, dans lequel au moins une partie de la surface de la plaque présente un relief.

7. Dispositif selon l'une quelconque des revendications 1 à 3, dans lequel la plaque est faite d'une matière polymère.

8. Dispositif selon l'une quelconque des revendications 1 à 3, dans lequel la plaque est faite de caoutchouc.

9. Dispositif selon l'une quelconque des revendications 1 à 3, dans lequel la plaque est faite de deux matières différentes.

10. Dispositif selon l'une quelconque des revendications 1 à 3, dans lequel le moyen pour réaliser l'action d'orientation externe comprend une tige cylindrique, un rouleau, ou une raclette.

11. Dispositif selon la revendication 10, dans lequel le moyen pour réaliser l'action d'orientation externe comprend de plus une seconde plaque, une extrémité de cette dernière étant fixée de sorte que pendant le mouvement de la seconde plaque par rapport au substrat, au moins une partie de la surface de la seconde plaque subit librement un mouvement de translation sur la surface de substrat immédiatement derrière le moyen principal pour réaliser l'action d'orientation externe.

12. Dispositif selon la revendication 10, dans lequel le moyen d'orientation comprend un relief superficiel.

13. Dispositif selon l'une quelconque des revendications précédentes, comprenant de plus un moyen pour enlever le solvant de la solution à cristaux liquides fournie.

14. Dispositif selon la revendication 13, dans lequel le moyen pour enlever le solvant comprend un élément chauffant, un souffleur d'air ou de gaz, ou une unité rayonnante, et est installé afin d'appliquer le traitement à au moins une partie de la surface de substrat.

15. Dispositif selon l'une quelconque des revendications précédentes, dans lequel le moyen d'approvisionnement comprend un injecteur, un système de rouleaux de transmission ou un canal avec un dosimètre de l'alimentation en solution.

16. Dispositif selon l'une quelconque des revendications précédentes, comprenant de plus un moyen (10) pour définir des conditions statiques pendant le processus de séchage.

17. Dispositif selon l'une quelconque des revendications précédentes, comprenant de plus un moyen anti-vibration (13).

18. Procédé de fabrication d'un film anisotrope sur un substrat à partir d'une solution à cristaux liquides de matières organiques et/ou inorganiques comprenant les étapes suivantes consistant à :
approvisionner la solution à cristaux liquides sur la surface d'un élément (5) pour diriger la solution ;
permettre à la solution de s'écouler le long de la surface de l'élément pour diriger la solution sur la surface du substrat (7) ;
faire subir un mouvement de translation au substrat (7) par rapport à l'élément (5) pour diriger la solution dans une première direction ; dans laquelle on autorise un flux laminaire de la solution sur le substrat ; et
appliquer une action d'orientation externe sur la solution sur le substrat par un moyen d'orientation (6, 11, 12) lorsque le substrat subit un mouvement de translation.

19. Procédé selon la revendication 18, comprenant de plus une étape de séchage de la solution à cristaux liquides fournie.

20. Procédé selon la revendication 18 ou la revendication 19, dans lequel l'élément pour diriger la solution est placé à une distance du substrat et du moyen d'orientation telle que la solution s'écoule de façon laminaire sur le substrat.
